Europäisches Patentamt

European Patent Office

Office européen des brevets

(11) Publication number: **0 107 349**
**B1**

# EUROPEAN PATENT SPECIFICATION

(45) Date of publication of patent specification: **09.08.89**

(51) Int. Cl.⁴: **C 04 B 35/80,** C 04 B 35/58, C 04 B 35/56

(21) Application number: **83305641.9**

(22) Date of filing: **22.09.83**

(54) Manufacturing method for fiber reinforced silicon ceramics sintered body.

(30) Priority: 24.09.82 JP 167192/82
24.09.82 JP 167193/82
24.09.82 JP 167194/82
24.09.82 JP 167195/82
28.09.82 JP 170154/82
28.09.82 JP 170155/82
28.09.82 JP 170156/82
28.09.82 JP 170157/82

(43) Date of publication of application:
02.05.84 Bulletin 84/18

(45) Publication of the grant of the patent:
09.08.89 Bulletin 89/32

(84) Designated Contracting States:
DE FR GB IT

(56) References cited:
GB-A-1 312 315
US-A-3 833 389

CHEMICAL ABSTRACTS, vol. 96, no. 6,
February 1982, page 293, abstract no. 39709v,
Columbus, Ohio, US; & JP - A - 81 100 168
(SUMITOMO ELECTRIC INDUSTRIES LTD.)
11.8.1981

(73) Proprietor: SUMITOMO ELECTRIC INDUSTRIES
LIMITED
No. 15, Kitahama 5-chome Higashi-ku
Osaka-shi Osaka 541 (JP)

(72) Inventor: Kamijo, Eiji c/o Itami Works
Sumitomo Electric Industries Ltd.
1-1, Koyakita 1-chome Itami-shi Hyogo (JP)
Inventor: Komura, Osamu c/o Itami Works
Sumitomo Electric Industries Ltd.
1-1, Koyakita 1-chome Itami-shi Hyogo (JP)
Inventor: Higuchi, Matsuo c/o Itami Works
Sumitomo Electric Industries, Ltd.
1-1, Koyakita 1-chome Itami-shi Hyogo (JP)

(74) Representative: Keltie, David Arthur et al
Baron & Warren 18 South End Kensington
London W8 5BU (GB)

(56) References cited:
PATENTS ABSTRACTS OF JAPAN, vol. 6, no.
202, (C-129)(1080), October 13, 1982; & JP - A -
57 111 300 (SUMTOMO DENKI KOGYO KK)
10.7.1982

Courier Press, Leamington Spa, England.

# EP 0 107 349 B1

**Description**

This invention relates to a heat resistant ceramics sintered body, and more particularly to a silicon ceramics sintered body, such as silicon carbide, silicon nitride or the like.

Silicon carbide and silicon nitride are superior among heat resistant ceramics especially in heat resistance, heat and impact resistance and corrosion resistance, and are effective as structural materials and component materials for turbines and diesel engines used in a high temperature gas. There is therefore considerable interest in their development.

The use of heat resistant ceramic sintered bodies as structural materials requires physical and chemical stability at a high temperature, and especially excellent mechanical characteristics.

The silicon nitride and silicon carbide are compounds with covalent bonding properties and are therefore difficult to sinter.

Accordingly, they are not sintered on their own, but in combination with sintering additives in amounts from a few percent to several tens percent thus forming low melting point compounds for sintering.

For example, for silicon carbide, sintering additives such as Al, B, $B_4C$, and $Al_2O_3$ are added alone or in combination in amounts from 1 to 20%. For silicon nitride, the usual additives are MgO, $Al_2O_3$ or $Y_2O_3$ alone or in combination in an amount from 5 to 20%. Both the materials are subjected to hot pressing to give a sintered body of about theoretical density.

GB—A—1312315 discloses a process for producing a heat-resistant reinforced composite material having a fibrous structure wherein a mixture of at least 85 mole% of a first component such as nitride or carbide of silicon and up to 15 mole% of an oxide of scandium, yttrium, lanthanum or a lanthanide is sintered in a non-oxidising atmosphere at a temperature such as to sinter the first component. The first component may be formed in situ by heating a precursor such as ferrosilicon.

Al, B, $B_4C$, MgO, $Al_2O_3$ or $Y_2O_3$ as sintering additives are advantageous in that the low melting point compound is formed as aforesaid to promote the sintering, but strength deteriorates at high temperatures owing to the presence of the low melting point compound.

Hence, ways have been investigated to reduce the amount of sintering additives as much as possible during the manufacturing of silicon nitride or silicon carbide sintered body, but at present the problem of deteriorating strength at a high temperature remains unsolved.

In the light of the above problems, the inventors, after a great deal of research to obtain a sintered body superior in strength at a high temperature as well as heat resistance, proposed a manufacturing method for a silicon nitride sintered body reinforced with fiber whiskers, disclosed in the Japanese Patent Applications (Patent Laying-Open Gazette) Nos. SHO 56-92180 and No. SHO 56-100618.

The whisker is generally a monocrystalline fiber and said to have a strength several tens to several hundred times as large as that of polycrystalline fibers.

The monocrystalline fibers have been widely studied for many applications for which it appears to be an ideal material since it has been discovered, since it exhibits no strength deterioration at a high temperature, and provides reinforcement by entanglement of monocrystalline fibers: and improvement in strength at high temperature even when the sintered contains the sintering additives, but have not yet put into practice.

The inventors disclosed in the aforesaid Japanese Patent Applications are intended to provide a method for making sintered bodies in which industrially the whiskers are easily dispensed into the silicon carbide or silicon nitride sintered body, so that a sintered body is obtainable which is of high strength and whose strength deteriorates little even at a high temperature. Such a manufacturing method, however, mixes the whiskers when the material powder is mixed, and thereafter the mixture is press-molded, so that the whiskers are not uniformly mixed, or become aligned in one direction only, thereby creating the problem of directional differences in the strength of the sintered body. Furthermore, uniform mixing and mass-mixing have been difficult because the fiber whiskers are simultaneously mixed with granular raw materials.

This latter problem could be eliminated by mixing in a granular whisker formation agent to form whiskers under heat treatment, producing the whiskers, and then sintering the material. This method has however been defective in that the whisker grows in length by 10 to 50 µm and is not uniform.

According to a first aspect of the invention there is provided a method of making a reinforced silicon ceramics sintered body which comprises mixing

a) a silicon ceramics powder

b) 1 to 75 wt.% based on the total mixture of a further silicon-containing component and

c) sintering additives

moulding the mixture to a predetermined shape and subjecting it to a heat treatment in a non-oxidising atmosphere, characterised in that the silicon component (b) comprises one or more whisker formation agents selected from Si, inorganic compounds containnig Si, organic compounds containing Si, mixtures of SiO or $SiO_2$ with carbon or silicon, and amorphous silicon ceramics powder and the mixture also includes (d) 0.01 to 5 wt.%, based on the total mixture of one or more whisker formation accelerators selected from Ni, Co, Cr, V, Ti, Ta, W, Mo and alloys thereof whereby whiskers are formed during a first said heat treatment before or after the moulding step, and in that following this whisker-forming heat treatment the moulded body is further densified and sintered in a non-oxidising atmosphere.

2

In the present invention, the raw material powder and sintering additives are not particularly defined, but may be of any suitable crystal structure and chemical composition.

The whisker formation agents are chosen to generate gaseous SiO in the non-oxidising atmosphere, the whisker growing through the gaseous phase of SiO. The Inventors have found that the desired effect is obtained when using whisker formation agents selected from silicon itself inorganic compounds containing Si, such as SiO or $SiO_2$, organic compounds containing Si, such as silicone rubber or silicon resin, and the other silicon compounds or mixtures thereof defined above which produce carbon by thermal decomposition.

In addition, the amount of the whisker formation agent is in the range from 1 to 75 wt.%, because an amount less than 1 wt.% is not effective whereas more than 75 wt.% adversely lowers strength. In cases where the raw material is silicon carbide, the compounding amount of whisker formation agent is preferably less than 70 wt.%.

An accelerator for whisker formation is added to the mixture of raw material powder, sintering additives and whisker formation agents, to produce the whiskers uniformly and rapidly.

The whisker formation accelerator is a metal or alloy which solid-solves Si, $N_2$ into liquid phase at the temperature used for the whisker formation heat treatment. The inventors have found that one or more metals and/or alloys selected from Ni, Co, Cr, V, Ti, Ta, W and Mo is suitable preferably in an amount of 0.01 to 5 wt.%. These alloys, when added and mixed, form a liquid phase at the temperature for whisker formation heat treatment so that the growth of whiskers is promoted by the well-known VLS (Vapour-Liquid-Solidification) mechanism to produce relatively long whiskers of about 40 to 50 µm in a short time.

In addition, the selected whisker formation accelerator, when used in a controlled amount under selected process conditions can produce further longer whiskers.

The details of the above process may be as disclosed in the Japanese Patent Applications (Patent Laying-Open Gazette) No. SHO 57-101000 and No. SHO 57-111300.

In brief, in the process of the present invention, the granular whisker formation agent together with the raw material powder and sintering additives and the whisker formation accelerator is subjected to a whisker formation heat treatment before or after moulding and then the moulded material is densified and sintered to obtain a fiber reinforced ceramics sintered body. The conventional sintering method, which produces a fibrous structure by a dissolving deposition mechanism of liquid phase and $Si_3N_4$ or SiC simultaneously with the densification and sintering, has the problem that the fiber grows in a manner such as to fill gaps and not to obtain a large aspect ratio. On the other hand the method of the invention produces whiskers and grows them in conditions of void ratio of 40 to 50% prior to densifying, thereby giving a fibrous structure of substantially larger aspect ratio.

The whisker formation heat treatment is preferably carried out at a temperature of 1300 to 1750°C under the non-oxidizing atmosphere for more than one hour in order to obtain an effective aspect ratio having regard to the atmosphere and temperature.

In a case where silicon nitride powder and silicon nitride whiskers are used for the raw material powder and whiskers respectively, it is preferable that the atmosphere for whisker formation heat treatment and densifying/sintering be paths composed of nitrogen gas and that the heat treatment temperature be 1400 to 1650°C.

The process of the invention will be illustrated by the following examples and references.

Example 1 (reference)

SiC powder (74 wt.%) was added with $B_4C$ powder (2 wt.%) as a sintering additive and with $SiO_2$ (20 wt.%) and C (4 wt.%) as whisker formation agents, which were ground with a ball mill for 120 hours and mixed. The mixed powder was press-moulded at 2 ton/$cm^2$ using a metal mould press. The moulded material was subjected to heat treatment for two hours in vacuum at 1550°C, $1\times10^{-3}$ Torr, continuously raised to a temperature of 2050°C in an atmosphere of argon under one atmosphere pressure, held for one hour and subjected to densifying-sintering.

The sintered test piece obtained was measured for transverse rupture strength by three-point bending at 20 mm span and observed for surface breaks by use of an SEM (scanning electron microscope).

Similarly, various whisker formation agents shown in Table.1 were added to form the moulded materials, which were sintered after heat treatment, so that the results of measurements on the test pieces are shown in Table 1 also.

# EP 0 107 349 B1

TABLE 1 (Reference)

| | | SiC raw material powder compounding amount (weight %) | Sintering additives (B$_4$C) adding amount (weight %) | Whisker formation agent | | Transverse rupture strength (kg/mm$^2$) |
|---|---|---|---|---|---|---|
| | | | | Kinds | Adding amount (weight %) | |
| Reference Example | 1.1 | 74 | 2 | SiO$_2$<br>C | 20<br>4 | 64 |
| | 1.2 | 76 | 2 | SiO$_2$<br>Si<br>C | 15<br>2<br>5 | 65 |
| | 1.3 | 52 | 2 | Silicon resin<br>SiO$_2$<br>C | 20<br>20<br>6 | 62 |
| | 1.4 | 34 | 2 | SiO$_2$<br>SiO<br>C | 36<br>16<br>12 | 65 |
| | 1.5 | 96 | 2.4 | SiO$_2$<br>C | 0.5<br>0.1 | 49 |
| | 1.6 | 25 | 2 | SiO$_2$<br>C | 60<br>12 | 38 |
| | 1.7 | 98 | 2 | — | — | 50 |

As shown in the Reference Examples 1.5 and 1.6, when the compounding amount of whisker formation agent was less than 1 wt.%, there was no effect and when more than 70 wt.%, the strength adversely lowers. On the other hand the addition of whisker formation agent in an amount of 1 to 70 wt.% improves the transverse rupture strength by more than 20%.

The whisker formation heat treatment temperature must be more than 1300°C because no whisker formation occurs at a temperature of 1300°C or less, but the whisker formation speed is slow at a temperature less than 1500°C and granular growth occurs at a temperature more than 1750°C so that a temperature from 1500 to 1750°C is deemed preferable.

In addition, the time period for the whisker formation heat treatment relates to the heat treatment temperature and usually need only be from 0.5 to 2 hours in the above temperature range.

Example 2 (Reference)

Crystalline Si$_3$N$_4$ powder, MgO powder of 5 wt.% as the sintering additives, and a whisker formation agent shown in Table 2, were ground and mixed by a usual ball mill for 50 hours, the mixed powder being molded under pressure of 1.5 t/cm$^2$ by use of a metal mold of the predetermined shape, subjected to heat treatment for two hours in an atmosphere of nitrogen of 400 Torr at 1450°C, and continuously held for one hour at a high temperature of 1750°C in an atmosphere of nitrogen at one atmospheric pressure for densifying sintering.

A test piece of 4×3×40 mm was cut out from the sintered body and the transverse rupture strength was measured at a 30 mm span to observe the broken surface. The results of measurement and observation were collected in Table 2 below. In addition, the Table 2, No. 2-1, shows a material containing no whisker formation agent, subjected to the heat treatment similarly under an atmosphere of nitrogen at 1450°C, and densifying-sintered.

4

TABLE 2 (Reference)

| | | Si₃N₄ Raw material powder compounding amount (weight %) | Sintering additives (MgO) adding amount (weight %) | Whisker formation agent addition amount (weight %) | Transverse rupture strength (kg/mm² | |
|---|---|---|---|---|---|---|
| | | | | | Room temperature | 1200°C |
| Reference Example | 2.1 | 95 | 5 | 0 | 75 | 40 |
| | 2.2 | 93 | 5 | Metal Si 2 | 80 | 55 |
| | 2.3 | 80 | 5 | SiO 15 | 85 | 58 |
| | 2.4 | 93 | 5 | Silicon rubber 2 | 80 | 57 |
| | 2.5 | 80 | 5 | Amorphous Si₃N₄ 15 | 85 | 59 |
| | 2.6 | 80 | 5 | SiO₂/C= 1 mol/1 mol 15 | 83 | 58 |
| | 2.7 | 80 | 5 | Metal Si+ amorphous Si₃N₄ 1 mol/1 mol 15 | 82 | 57 |
| | 2.8 | 80 | 5 | SiO+amorphous Si₃N₄ 1 mol/1 mol 15 | 85 | 57 |
| | 2.9 | 50 | 5 | Amorphous Si₃N₄ 45 | 90 | 52 |
| | 2.10 | 20 | 5 | Amorphous Si₃N₄ 75 | 88 | 53 |
| | 2.11 | 90 | 5 | Metal Si 5 | 77 | 51 |
| | 2.12 | 80 | 5 | Metal Si/SiO₂= 1 mol/1 mol 15 | 80 | 53 |

From the above Table, it can be seen that the sintered body can be improved in transverse rupture strength at room temperature and largely in the strength at a high temperature of 1200°C. The compounding amount of whisker formation agent, when less than 1% or more than 75%, is less effective than an amount in the range from 1 to 75%.

In addition, the whisker formation speed becomes extremely slow in a range of whisker formation heat treatment temperature of 1400°C or less, which is not practical. Furthermore, in a temperature range of more than 1650°C the densifying sintering is promoted on the way of whisker growth, which is less effective. Hence, a temperature range of 1400 to 1650°C is the most preferable.

Upon observing the broken face of the specimen by a microscope after measuring the transverse rupture strength of the same, whisker fibers of about 1 μm in diameter and 10 to 50 μm in length were confirmed to be entangled three-dimensionally with each other so as to be formed in fiber reinforced type.

In addition, the whisker formation heat treatment is preferably carried out for 0.5 to 2 hours. A long treatment time will form longer fibers, but little further benefit is obtained by continuing for more than two hours.

Example 3 (Reference)

$Al_2O_3$ of 2 wt.% and $Y_2O_3$ of 5 wt.% were used as the sintering additives instead of MgO of 5 wt.% and metal Si of 2 wt.% was used as the whisker formation agent, residual $Si_3N_4$ being of 91 wt.%.

The heat treatment and sintering were carried out as the same as Reference Example 2 except for using the above composition of raw material. Upon measuring the characteristic of sintered body obtained, the transverse rupture strength was of 90 kg/mm$^2$ at a room temperature and 60 kg/mm$^2$ at 1200°C, which was improved as in Reference Example 2.

Example 4 (Reference)

The same mixed powder as in Reference Example 1 was held in a vacuum of $1 \times 10^{-3}$ Torr at 1550°C, press-molded by a metal mold under pressure of 2 ton/cm$^2$ after whisker formation heat treatment, and molded into a transverse rupture strength measuring specimen, the molded body being held under an atmosphere or argon at one atmospheric pressure and subjected to the densifying sintering.

After measuring the transverse rupture strength of the sintered specimen by the method the same as Reference Example 1, the results were obtained as shown in Table 3.

TABLE 3 (Reference)

| | | SiC raw material powder compounding amount (weight %) | Sintering additives ($B_4C$) adding amount (weight %) | Whisker formation agent | | Transverse rupture strength (kg/mm$^2$) |
|---|---|---|---|---|---|---|
| | | | | Kinds | Adding amount (weight %) | |
| Reference Example | 4.1 | 74 | 2 | SiO$_2$<br>C | 20<br>4 | 65 |
| | 4.2 | 76 | 2 | SiO$_2$<br>Si<br>C | 15<br>2<br>5 | 64 |
| | 4.3 | 52 | 2 | Silicon resin<br>SiO$_2$<br>C | 20<br>20<br>6 | 63 |
| | 4.4 | 34 | 2 | SiO$_2$<br>SiO<br>C | 36<br>16<br>12 | 65 |

Example 5 (Reference)

The mixed powder the same as in Reference Example 2 was subjected to the heat treatment for 2 hours in an atmosphere of nitrogen of 400 Torr at 1450°C and then molded by use of mold of the predetermined shape under pressure of 1.5 t/cm$^2$, the molded body having been held for one hour at a high temperature of 1750°C in an atmosphere of nitrogen under pressure of one atmospheric pressure and subjected to the densifying-sintering.

The sintered body specimen obtained was measured of its transverse rupture strength by the same method as Reference Example 2, the result of which was shown in Table 4.

TABLE 4 (Reference)

| | | Si₃N₄ Raw material powder compounding amount (weight %) | Sintering additives (MgO) adding amount (weight %) | Whisker formation agent adding amount (weight %) | Transverse rupture strength (kg/mm²) | |
|---|---|---|---|---|---|---|
| | | | | | Room temperature | 1200°C |
| Reference Example | 5.1 | 93 | 5 | Metal Si 2 | 81 | 54 |
| | 5.2 | 80 | 5 | SiO 15 | 88 | 60 |
| | 5.3 | 93 | 5 | Silicon rubber 2 | 79 | 55 |
| | 5.4 | 80 | 5 | Amorphous Si₃N₄ 15 | 87 | 60 |
| | 5.5 | 80 | 5 | SiO₂/C= 1 mol/1 mol 15 | 82 | 56 |
| | 5.6 | 80 | 5 | Metal Si+ amorphous Si₃N₄ 1 mol/1 mol 15 | 80 | 58 |
| | 5.7 | 80 | 5 | SiO+amorphous Si₃N₄ 1 mol/1 mol 15 | 81 | 55 |
| | 5.8 | 50 | 5 | Amorphous Si₃N₄ 45 | 89 | 54 |
| | 5.9 | 20 | 5 | Amorphous Si₃N₄ 75 | 90 | 55 |
| | 5.10 | 90 | 5 | Metal Si 5 | 76 | 50 |
| | 5.11 | 80 | 5 | Metal Si/SiO₂= 1 mol/1 mol 15 | 79 | 52 |

As seen from comparison of Tables 1 and 3 on the one hand and 2 and 4 on the other, even when the mixed powder is subjected to the heat treatment to previously produce the whiskers and then molded and sintered, the sintered body was found to have a characteristic about equivalent to that of sintered body which produced whisker by heat treatment after molding.

Example 6
SiC powder, sintering additives, whisker formation agents, and whisker formation accelerators, were compounded in composition shown in the Table 5 to produce the sintered body by the same method as Reference Example 1.

After measurement of transverse rupture strength of sintered body specimen obtained, the results were given in Table 5.

7

TABLE 5

| | | SiC raw material powder compound-ing amount (weight %) | Sintering additives (B$_4$C) add-ing amount (weight %) | Whisker for-mation agent | | Whisker formation accelerator | | Transverse rupture strength (kg/mm$^2$) | |
|---|---|---|---|---|---|---|---|---|---|
| | | | | Kinds | Adding amount (weight %) | Kinds | Adding amount (weight %) | Room temper-ature | 1200°C |
| Example | 6.1 | 73 | 2 | SiO$_2$<br>Si<br>C | 15<br>2<br>5 | Ti | 3 | 72 | 69 |
| | 6.2 | 47 | 2 | Silicon resin<br>SiO$_2$<br>C | 20<br>20<br>6 | Mo | 5 | 74 | 71 |
| | 6.3 | 73 | 2 | SiO$_2$<br>C | 20<br>4 | Co | 1 | 71 | 69 |
| | 6.4 | 95 | 2.2 | SiO$_2$<br>C | 1.5<br>0.3 | V | 1 | 72 | 70 |
| | 6.5 | 73 | 2 | SiO$_2$<br>Si<br>C | 15<br>2<br>5 | W | 3 | 73 | 72 |

EP 0 107 349 B1

Example 7

Crystalline $Si_3N_4$ powder, sintering additives, whisker formation agents, and whisker formation accelerators, were compounded in composition shown in Table 6 to be formed in a sintered body by the same method as Reference Example 2 so that the transverse rupture strength was measured. The results of measurement were shown in Table 6.

TABLE 6

| | $Si_3N_4$ powder (weight %) | Sintering additives (MgO) (weight %) | Whisker formation agent (weight %) | | Whisker formation accelerator (weight %) | | Transverse rupture strength (kg/mm$^2$) | |
|---|---|---|---|---|---|---|---|---|
| | | | | | | | Room temperature | 1200°C |
| 7.1 | 79.5 | 5 | SiO | 15 | Ti | 0.5 | 83 | 50 |
| 7.2 | 44.5 | 5 | SiO | 50 | Mo | 0.5 | 90 | 56 |
| 7.3 | 79.9 | 5 | Metal Si | 15 | Ni | 0.1 | 85 | 53 |
| 7.4 | 79.99 | 5 | Amorphous $Si_3N_4$ | 15 | Co | 0.01 | 86 | 53 |
| 7.5 | 74.5 | 5 | $SiO_2$/C =1 mol/1 mol | 20 | Cr | 0.5 | 88 | 54 |
| 7.6 | 74.5 | 5 | Si/$SiO_2$ =1 mol/1 mol | 20 | W | 0.5 | 89 | 55 |
| 7.7 | 79.7 | 5 | Silicon rubber | 15 | V | 0.3 | 83 | 53 |

It was recognized from Tables 5 and 6 that the whisker formation accelerator was added to allow the whisker growth to prevail sufficiently through the sintered material to thereby improve the strength more than the case of non-addition of the same.

Also, the whisker formation accelerator of compounding amount of 0.01% or less is less effective and that exceeding 5% is effective to formation acceleration, but its metal component will deteriorate the high temperature characteristic and corrosion resistance, whereby a range of compounding amount from 0.01 to 5% was recognized to be effective.

Example 8

SiC powder, sintering additives, whisker formation agents, and whisker formation accelerators, were compounded in composition shown in Table 7 to form a sintered body by the same method as Reference Example 4 to thereby measure the transverse rupture strength, the results of measurement having been shown in Table 7.

TABLE 7

| | | SiC raw material powder compounding amount (weight %) | Sintering additives (B₄C) adding amount (weight %) | Whisker formation agent | | Whisker formation accelerator | | Transverse rupture strength (kg/mm²) | |
|---|---|---|---|---|---|---|---|---|---|
| | | | | Kinds | Adding amount (weight %) | Kinds | Adding amount (weight %) | Room temperature | 1200°C |
| Example | 8.1 | 73 | 2 | SiO₂ Si C | 15 2 5 | Ti | · 3 | 72 | 67 |
| | 8.2 | 47 | 2 | Silicon resin SiO₂ C | 20 20 6 | Mo | 5 | 74 | 72 |
| | 8.3 | 73 | 2 | SiO₂ C | 20 4 | Co | 1 | 72 | 69 |
| | 8.4 | 95 | 2.2 | SiO₂ C | 1.5 0.3 | V | 1 | 73 | 71 |
| | 8.5 | 73 | 2 | SiO₂ Si C | 15 2 5 | W | 3 | 73 | 69 |

Example 9

Crystalline $Si_3N_4$ powder, sintering additives, whisker formation agents, and whisker formation accelerators, were compounded in composition shown in Table 8 to produce a sintered body by the same method as Reference Example 2, thereby having measured the transverse rupture strength. The results of measurement have been given in Table 8.

## EP 0 107 349 B1

### TABLE 8

| | | Si$_3$N$_4$ powder (weight %) | Sintering additives (MgO) (weight %) | Whisker formation agent (weight %) | | Whisker formation accelerator (weight %) | | Transverse rupture strength (kg/mm$^2$) | |
|---|---|---|---|---|---|---|---|---|---|
| | | | | | | | | Room temperature | 1200°C |
| Comparative Example | 9.1 | 95 | 5 | | 0 | | 0 | 70 | 38 |
| | 9.2 | 93 | 5 | Metal Si | 2 | | 0 | 80 | 53 |
| | 9.3 | 93 | 5 | | 0 | Fe | 0.01 | 65 | 35 |
| Example | 9.4 | 77 | 5 | SiO | 15 | Ni | 0.3 | 88 | 63 |
| | 9.5 | 88 | 5 | Silicon rubber | 2 | W | 0.5 | 86 | 61 |
| | 9.6 | 15 | 5 | Amorphous Si$_3$N$_4$ | 75 | Ti | 0.5 | 85 | 64 |
| | 9.7 | 77 | 5 | SiO$_2$C =1 mol/1 mol | 15 | V | 5 | 84 | 60 |
| | 9.8 | 76 | 5 | SiO/amorphous Si$_3$N$_4$=1/1 mol | 15 | Cr | 0.4 | 83 | 61 |

## Claims

1. A method of making a reinforced silicon ceramics sintered body which comprises mixing
   a) a silicon ceramics powder
   b) 1 to 75 wt.% based on the total mixture of a further silicon-containing component and
   c) sintering additives
   moulding the mixture to a predetermined shape and subjecting it to a heat treatment in a non-oxidizing atmosphere, characterised in that the silicon component (b) comprises one or more whisker formation agents selected from Si, inorganic compounds containing Si, organic compounds containing Si, mixtures of SiO or SiO$_2$ with carbon or silicon, and amorphous silicon ceramics powder and the mixture also includes (d) 0.01 to 5 wt.% based on the total mixture of one or more whisker formation accelerators selected from Ni, Co, Cr, V, Ti, Ta, W, Mo and alloys thereof whereby whiskers are formed during a first said heat treatment before or after the moulding step, and in that following this whisker-forming heat treatment the moulded body is further densified and sintered in a non-oxidising atmosphere.

2. A method according to claim 1 wherein said silicon ceramics whiskers comprise silicon carbide or silicon nitride.

3. A method according to claim 1 or claim 2 wherein said silicon ceramics powder comprises silicon carbide or silicon nitride.

4. A method according to any preceding claim wherein the temperature used for the whisker formation heat treatment is 1300 to 1750°C.

5. A method according to any preceding claim wherein the ceramics whiskers have an average length of 10 to 100 µm.

## Patentansprüche

1. Verfahren zur Herstellung eines verstärkten siliziumkeramischen gesinterten Körpers, welches die folgenden Verfahrensschritte umfaßt:
   Mischen
   a) eines siliziumkeramischen Pulvers
   b) 1 bis 75 Gew.%, basierend auf der Gesamtmischung, einer weiteren siliziumhaltigen Komponente,
   c) von Sinterzusätzen,
   Formen der Mischung in eine vorbestimmte Form und
   deren Aussetzung einer Wärmebehandlung in einer nichtoxidierenden Atmosphäre,

11

dadurch gekennzeichnet, daß die Siliziumkomponente (b) aus einem oder mehreren Whiskerbildungsmitteln, ausgewählt aus Si, anorganischen Si-haltigen Verbindungen, Mischungen von SiO oder $SiO_2$ mit Kohlenstoff oder Silizium, und amorphem siliziumkeramischen Pulver besteht, daß die Mischung auch (d) 0,01 bis 5 Gew.%, basierend auf der Gesamtmischung, eines oder mehrerer Whiskerbildungsbeschleunigern, ausgewählt aus Ni, Co, Cr, V, Ti, Ta, W, Mo und Legierungen davon, enthält, wodurch Whisker während der ersten Wärmebehandlung vor oder nach dem Formungsschnitt gebildet werden, und daß der geformte Körper nach der whiskerbildenden Wärmebehandlung weiter verdichtet und in einer nichtoxidierenden Atmosphäre gesintert wird.

2. Verfahren nach Anspruch 1, bei dem die siliziumkeramischen Whisker aus Siliziumkarbid oder Stickstoffsilicid bestehen.

3. Verfahren nach Anspruch 1 oder 2, bei dem das siliziumkeramische Pulver aus Siliziumkarbid oder Stickstoffsilicid besteht.

4. Verfahren nach einem der vorstehenden Ansprüche, bei dem die Temperatur für die Whiskerbildungs-Wärmebehandlung im Bereich von 1300 bis 1750°C liegt.

5. Verfahren nach einem der vorstehenden Ansprüche, bei dem die keramischen Whisker eine durchschnittliche Länge von 10 bis 100 µm aufweisen.

**Revendications**

1. Procédé pour la fabrication d'un corps fritté en céramique au silicium, renforcé, qui consiste à mélanger
   a) une poudre de céramique au silicium,
   b) de 1 à 75% en poids, par rapport au mélange total, d'un autre composant contenant du silicium, et
   c) des additifs de frittage

à mouler le mélange pour lui donner une forme prédéterminée et à le soumettre à un traitement thermique dans une atmosphère non-oxydante, caractérisé en ce que le composant contenant du silicium (b) comprend un ou plusieurs agents de formation de trichites, choisi parmi Si, les composés inorganiques contenant du Si, les composés organiques contenant du Si, les mélanges de SiO ou de $SiO_2$ et de carbone ou de silicium, et la poudre de céramique au silicium amorphe, et le mélange comprend aussi (d) de 0,01 à 5% en poids, par rapport au mélange total, d'un ou plusieurs accélérateurs de formation des trichites, choisi parmi Ni, Co, Cr, V, Ti, Ta, W, Mo et leurs alliages, des trichites étant formées au cours d'un premier traitement thermique avant ou après l'étape de moulage; et en ce que, après ce traitement thermique de formation des trichites, le corps moulé subit une densification plus poussée et est fritté dans une atmosphère non oxydante.

2. Procédé selon la revendication 1, dans lequel lesdites trichites de céramique au silicium comprennent du carbure de silicium et du nitrure de silicium.

3. Procédé selon la revendication 1 ou 2, dans lequel ladite poudre de céramique au silicium comprend du carbure de silicium ou du nitrure de silicium.

4. Procédé selon l'une quelconque des revendications précédentes, dans lequel la température utilisée pour le traitement thermique de formation des trichites est de 1300 à 1750°C.

5. Procédé selon l'une quelconque des revendications précédentes, dans lequel les trichites de céramique ont une longueur moyenne de 10 à 100 µm.